# EUROPEAN PATENT APPLICATION

(11) **EP 4 170 159 A1**
(43) Date of publication of application: **26.04.2023**
(21) Application number: 21829754.7
(22) Date of filing: 21.06.2021
(51) Int. Cl.: F03G 7/08

(54) **POWER GENERATOR**

(30) Priority: 22.06.2020 WO PCT/JP2020/024443
(71) Applicant: Usui Technos Co., Ltd., Niihama-shi, Ehime, 792-0893 (JP)
(72) Inventor: SHIRAISHI, Yasutaka, NIIHAMA-SHI, Ehime 792-0893 (JP)
(74) Representative: SSM Sandmair
(86) International application number: PCT/JP2021/023332
(87) International publication number: WO 2021/261425

(57) **Abstract**

The purpose of the present invention is to provide an energy-saving power generator for generating a power by rotating a rotary member. A power generator 100 for generating a power by rotating a rotary member 10, comprising: opposing columns 20 (21, 22) for supporting the power generator 100; one or more movable inclined members 40 inclined from one column 21 to other column 22 for rotating the rotary member 10 and capable of ascending and descending along the columns by one or more roller members 30 arranged at opposite ends of the movable inclined members 40 and by roller receiving members 35 provided at the columns 20 (21, 22); and one or more fixed inclined members 60 inclined from the other column 22 to the one column 21 for rotating the rotary member 10 and provided at the columns 20 (21, 22) or at supporting members 50 for supporting the columns.

## Description

### BACKGROUND OF THE INVENTION

### Field of the Invention

The present invention relates to a power generator for generating a power by rotating a rotary member.

### Description of Related Art

In the past, a pump, a compressor, or the like has been used for transferring materials such as a gas or a liquid, and an electric power has been used mainly as a power for these machines. A pump and else using an electric power have been disclosed in the past.

For example, in Patent Document 1, a magnetic pump composed of a front casing, a rear casing, a supporting shaft, a magnetic can, and else is described.

In addition, in Patent Document 2, a pump device composed of a pump main body, a driving unit, an operating unit, and a joint mechanism is described.
Patent Document 1: WO2015/097851
Patent Document 2: WO2018/061110

### SUMMARY OF THE INVENTION

However, as mentioned in the above, a power described in these documents are mainly an electric power, and it was inappropriate for use in an area or a place where there is no power supply, so it was difficult to transfer materials such as a gas or a liquid.

Here, if it is possible to generate some kind of power without using an electric power as possible, the materials such as a gas or a liquid can be transferred by the power generated.

So, the purpose of the present invention is to provide an energy-saving power generator for generating a power by rotating a rotary member.

A power generator relating to one embodiment of the present invention is a power generator for generating a power by rotating a rotary member, comprising: opposing columns for supporting the power generator; one or more movable inclined members inclined from one column to other column for rotating the rotary member and capable of ascending and descending along the columns by one or more roller members arranged at opposite ends of the movable inclined members and by roller receiving members provided at the columns; and one or more fixed inclined members inclined from the other column to the one column for rotating the rotary member and provided at the columns or at supporting members for supporting the columns.

In this way, an energy-saving power generator for generating a power by rotating a rotary member is provided.

In addition, in one embodiment of the present invention, it may further comprise one or more cylinders arranged at the movable inclined members and/or the fixed inclined members and/or the rotary member.

In this way, a power is generated by a rotating body pushing a cylinder.

In addition, in one embodiment of the present invention, two or more of the movable inclined members and two or more of the fixed inclined members may be provided.

In this way, a rotary member is rotated stably, so a power is generated efficiently.

In addition, in one embodiment of the present invention, the fixed inclined members may be arranged at inner side of the movable inclined members.

In this way, it will be relatively easy for movable inclined members to ascend and descend along columns, so a power is generated efficiently. In addition, a maintenance of movable inclined members will be also easy.

In addition, in one embodiment of the present invention, it may further comprise pressing parts respectively arranged at a top of the cylinders to be pressed by the rotary member.

In this way, a rotary member can press pressing parts smoothly, and a power is transmitted to cylinders easily, so a power is generated efficiently.

In addition, in one embodiment of the present invention, the pressing parts respectively comprise a plane part, and there may be a difference between an angle of the plane part and an angle of inclinations of the movable inclined members and the fixed inclined members.

In this way, a downward power (gravity) of a rotary member transmitted to cylinders will be increased, so a power is generated efficiently.

In addition, in other embodiment of the present invention, the rotary member may be a plurality of wheels rotating on the movable inclined members or the fixed inclined members, and the plurality of wheels may be connected to a base and move integrally as a carriage.

In this way, a carriage is operated stably while keeping a horizontal state (same posture).

At this time, in other embodiment of the present invention, one or more cylinders operating in a vertical direction may be arranged at the carriage.

In this way, a power may be generated by interlocking an operation of a carriage with a movement of cylinders.

In addition, in other embodiment of the present invention, a pressure converter comprising: one or more cylinders; wheels for cylinders respectively arranged at a tip of respective piston rods of the cylinders; a frame for holding the one or more cylinders; and a weight arranged at the frame, may be arranged at the carriage.

In this way, by arranging a pressure converter at a carriage, a power is generated efficiently by interlocking with an operation of the carriage.

In addition, in other embodiment of the present invention, rails for cylinders are arranged to interlock with a movement of movable inclined members, and the wheels for cylinders of the pressure converter move up and down in accordance with an ascent and a descent of the movable inclined members, while moving on the rails for cylinders, to transmit a power to the cylinders via the piston rods.

In this way, by placing wheels of the pressure converter on rails for cylinders, an operation of movable inclined members is converted efficiently to a power via cylinders.

According to the present invention, an energy-saving power generator for generating a power by rotating a rotary member is provided. Especially, even in an area or a place where an electric power is not supplied, materials such as a gas or a liquid can be transferred by a power generated without using a power supply.

### BRIEF DESCRIPTION OF THE DRAWINGS

FIG. 1 is a perspective view of a power generator relating to one embodiment of the present invention.
FIG. 2 is a side view of a power generator relating to one embodiment of the present invention, FIG. 2(A) is a view of a state when a movable inclined member is descended and before a rotary member rotates on an inclination of a movable inclined member, FIG. 2(B) is a view of a state when a movable inclined member is ascended and during a rotation of a rotary member on an inclination of a movable inclined member, and FIG. 2(C) is a view of a state when an ascent of a movable inclined member is ended and a rotation of a rotary member is stopped.
FIG. 3 is a side view of a power generator relating to one embodiment of the present invention, FIG. 3(A) is a view of a state when a movable inclined member is ascended and before a rotary member rotates on an inclination of a fixed inclined member, FIG. 3(B) is a view of a state when a movable inclined member is descended and during a rotation of a rotary member on an inclination of a fixed inclined member, and FIG. 3(C) is a view of a state when a descent of a movable inclined member is ended and a rotation of a rotary member is stopped.
FIG. 4 is a side view of a power generator relating to one embodiment of the present invention, FIG. 4(A) is a view of a state when a movable inclined member is ascended and before a rotary member rotates on an inclination of a movable inclined member, and FIG. 4(B) is a view of a state when a rotation of a rotary member is ended.
FIG. 5 is a side view of a power generator relating to one embodiment of the present invention, FIG. 5(A) is a view of a state when a movable inclined member is descended and before a rotary member rotates on an inclination of a fixed inclined member, and FIG. 5(B) is a view of a state when a rotation of a rotary member is ended.
FIG. 6 is a partially enlarged side view of a power generator, FIG. 6(A) is a side view of a power generator comprising pressing parts at a top of cylinders arranged at a fixed inclined member, and FIG. 6(B) is an enlarged view of FIG. 6(A).
FIG. 7(A) is a side view of a power generator relating to other embodiment of the present invention, and FIG. 7(B) is a plan view thereof (view transmitting a base).
FIG. 8(A) is a front view of a pressure converter in a power generator relating to the present invention, FIG. 8(B) is a plan view thereof, and FIG. 8(C) is a side view thereof.
FIG. 9(A) is side view of a power generator comprising a pressure converter relating to other embodiment of the present invention, and FIG. 9(B) is a plan view thereof.

### DETAILED DESCRIPTION OF THE INVENTION

The present inventors have repeated keen research considering a problem that it is difficult to transfer materials such as a gas or a liquid in an area or a place where an electric power is not supplied, or in an area with a power shortage, as a significant electric power is necessary for transferring materials such as a gas or a liquid using a pump or a compressor. As a result, the present inventors have found that the above problem can be resolved by obtaining a power by rotating a rotary member. The present invention is completed based on these findings. Hereinafter, explaining about preferred embodiments of the present invention.

In addition, the embodiments explained in below will not unjustly limit the content of the present invention described in claims, and it can be modified within a scope not deviating from a gist of the present invention. In addition, it is not limited that all the structures explained in the embodiments are necessary as means for solving the problem of the present invention. Explaining about a power generator 100 relating to one embodiment of the present invention.

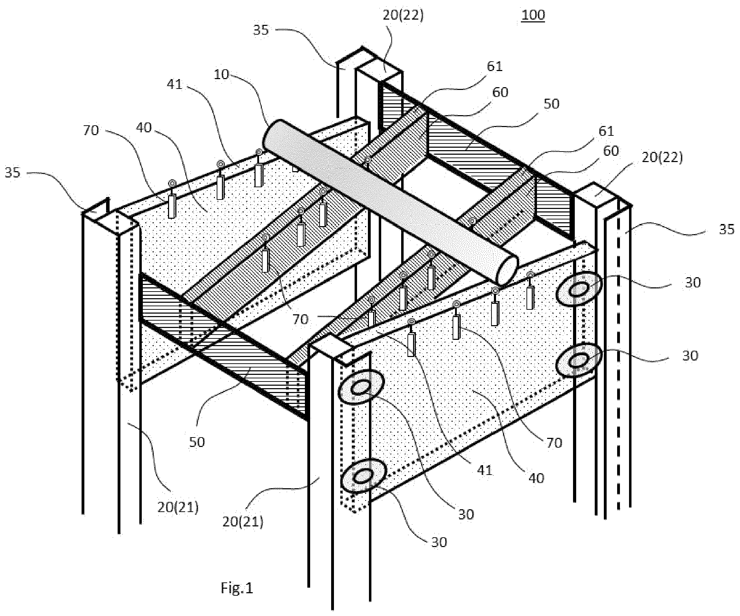

A power generator 100 relating to one embodiment of the present invention generates a power by rotating a rotary member 10. As illustrated in FIG. 1, the power generator 100 relating to one embodiment of the present invention comprises columns 20 (21, 22), a movable inclined member 40, and a fixed inclined member 60. Explaining about a detailed structure of the power generator 100 relating to one embodiment of the present invention in below.

The columns 20 (21, 22) are supporting the power generator 100 and opposing to each other. In FIG. 1, there are four opposing columns. A number of the columns 20 may be two (one at one side and at other side respectively), three (one at one side and two at other side), four (two at one side and at other side respectively), or more. Depending on the situation, a number of the columns 20 (21, 22) may be changed accordingly.

Also, one or more roller receiving members 35 are arranged at the columns 20 (21, 22), in order to enable a movable inclined member 40, which will be described later, to ascend and descend. A number, a shape, and a material of the roller receiving members 35 are not limited as long as they can receive roller members 30, which will be described later. In addition, a number of the roller members 30 is preferably four. Also, in FIG. 1, the roller receiving members are in a rail shape. As in FIG. 1, the roller receiving members may be rails, or may be planes without rails and the roller members 30 move on the plane.

Further, a height of the columns 20 (21, 22) can be changed accordingly. It depends on a method for using the power generator 100 relating to one embodiment of the present invention, it is preferable that the columns 20 (21, 22) are higher than supporting members 50, which will be described later, so that the rotary member 10 can be received.

The movable inclined member 40 is having an inclination 41 for rotating the rotary member 10 from one column 21 side to other column 22 side. The rotary member 10 rotates on this inclination 41. In addition, at both ends of the movable inclined member 40, roller members 30 are arranged to enable the movable inclined member 40 to ascend and descend. These roller members 30 and the roller receiving members 36 enable the movable inclined member 40 to ascend and descend along the columns 20 (21, 22). In addition, an ascent and a descent of the movable inclined member 40 may be performed by a man-power, a buoyant force, a wave power, small electric power, or the like.

Also, it is preferable that two or more movable inclined members 40 are arranged than one movable inclined member 40. In this way, the rotary member 10 is rotated stably, so a power is generated efficiently.

The fixed inclined member 60 is having an inclination 61 for rotating the rotary member 10 from other column 22 side to one column 21 side. The rotary member 10 rotates on this inclination 61. In addition, the inclination 61 of the fixed inclined member 60 and the inclination 41 of the movable inclined member 40 are arranged in opposite directions. This is to enable the rotary member 10 to be rotated on the inclination 41 of the movable inclined member 40 and the inclination 61 of the fixed inclined member 60 respectively, when the movable inclined member 40 is ascended and descended. The fixed inclined member 60 is fixed, and not movable as the movable inclined member 40 which can ascend and descend.

The fixed inclined member 60 may be arranged directly at the columns 20 (21, 22), or the fixed inclined member 60 may be arranged at the supporting members 50 for supporting the columns 20 (21, 22), as illustrated in FIG. 1. In this case, the fixed inclined member 60 will be inclined from a supporting member 50 arranged at other column 22 side to a supporting member 50 arranged at one column 21 side.

Also, it is preferable that two or more fixed inclined members 60 are arranged than one fixed inclined member 60. In this way, the rotary member 10 is rotated stably, so a power is generated efficiently.

When there are two or more movable inclined members 40 and two or more fixed inclined members 60, the fixed inclined members 60 are preferably arranged at inner side of the movable inclined members 40. In this way, as the movable inclined members 40 are at outer side, it will be relatively easy to ascend and descend the movable inclined members 40 along the columns 20 (21, 22), so a power is generated efficiently. Also, a maintenance of the movable inclined members 40 and the roller members 30 will be easy.

A shape of the rotary member 10 is not limited particularly as long as it could rotate on the inclination 41 of the movable inclined member 40 and the inclination 61 of the fixed inclined member 60, but it is preferable to be in a cylindrical shape. When the rotary member 10 is in a cylindrical shape, the rotary member 10 can rotate on the inclination 41 of the movable inclined member 40 and the inclination 61 of the fixed inclined member 60 stably. Also, the rotary member 10 obtains a power by rotating on the inclination 41 and the inclination 61 respectively, so it is preferable to use the rotary member 10 with heavy self-weight. For example, the rotary member 10 is preferably made of a metal such as iron, copper, and aluminum, or made of a rubber with high density.

It may generate electricity or move a pump or the like by using a power generated by rotating the rotary member 10. For example, the rotary member 10 may be connected to a motor, and generate electricity by a rotation of the rotary member 10.

Also, it is preferable to further comprise one or more cylinders 70 arranged at the movable inclined member 40 and/or the fixed inclined member 60 and/or the rotary member 10. That is, the cylinders 70 may be arranged at each of the movable inclined member 40, the fixed inclined member 60, and the rotary member 10, or the cylinders 70 may be arranged at one or two members of the movable inclined member 40, the fixed inclined member 60, and the rotary member 10. Also, one or more cylinders 70 may be arranged. From a point of view of obtaining a lot of power, it is preferable to arranged the cylinders 70 at the movable inclined member 40 and the fixed inclined member 60 respectively. Also, (unillustrated) cylinder heads may be arranged in addition to the cylinders 70. Further, it is preferable that the cylinders 70 are having a structure to return to its original state after pressing, for example by using an elastic body such as a spring.

Further, the cylinders 70 and the cylinder heads may be embedded and incorporated in the inclination 41 of the movable inclined member 40 and the inclination 61 of the fixed inclined member 60. Pressing parts 80, which will be described later, may also be embedded and incorporated together with the cylinders 70 and the cylinder heads.

Next, explain about a method for using a power generator 100 relating to one embodiment of the present invention in below, but it is only an example. It is fine as long as a power is generated by rotating a rotary member 10 by the structures described in the above, so it will not be limited by the using method.

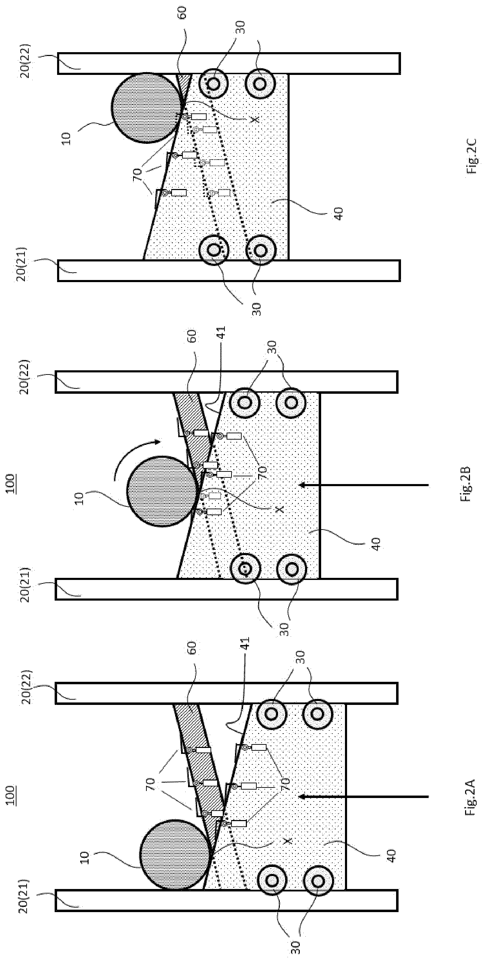

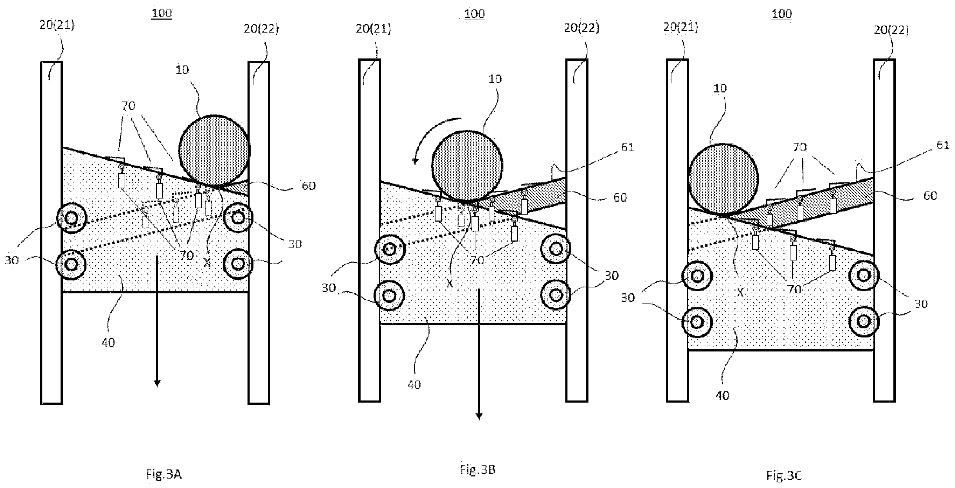

Explaining an example using FIG. 2 and FIG. 3. FIG. 2 is a side view of a power generator relating to one embodiment of the present invention, FIG. 2(A) is a view of a state when a movable inclined member is descended and before a rotary member rotates on an inclination of a movable inclined member, FIG. 2(B) is a view of a state when a movable inclined member is ascended and during a rotation of a rotary member on an inclination of a movable inclined member, and FIG. 2(C) is a view of a state when an ascent of a movable inclined member is ended and a rotation of a rotary member is stopped.

Also, FIG. 3 is a side view of a power generator relating to one embodiment of the present invention, FIG. 3(A) is a view of a state when a movable inclined member is ascended and before a rotary member rotates on an inclination of a fixed inclined member, FIG. 3(B) is a view of a state when a movable inclined member is descended and during a rotation of a rotary member on an inclination of a fixed inclined member, and FIG. 3(C) is a view of a state when a descent of a movable inclined member is ended and a rotation of a rotary member is stopped. In addition, descriptions of roller receiving members are omitted in FIG. 2 and FIG. 3. In addition, FIG. 2 and FIG. 3 are views in which cylinders 70 are arranged at the movable inclined member 40 and the fixed inclined member 60.

When it will be in a state that the movable inclined member 40 is ascending as illustrated in FIG. 2(B) from a state that the movable inclined member 40 is descended as illustrated in FIG. 2(A), the rotary member 10 rotates on the inclination 41 of the movable inclined member 40 and the inclination 61 of the fixed inclined member 60 and pushes the cylinders 70. At this time, when the cylinders 70 are arranged at both of the movable inclined member 40 and the fixed inclined member 60, the rotary member 10 can push both of the cylinders 70 at the movable inclined member 40 and the fixed inclined member 60. When an ascent of the movable inclined member 40 is finished, it will be in a state as illustrated in FIG. 2(C), and a rotation of the rotary member 10 will be stopped.

And, when it will be in a state that the movable inclined member 40 is descending as illustrated in FIG. 3(B) from a state that the movable inclined member 40 is ascended as illustrated in FIG. 3(A), the rotary member 10 rotates on the inclination 41 of the movable inclined member 40 and the inclination 61 of the fixed inclined member 60 and pushes the cylinders 70. At this time, when the cylinders 70 are arranged at both of the movable inclined member 40 and the fixed inclined member 60, the rotary member 10 can push both of the cylinders 70 at the movable inclined member 40 and the fixed inclined member 60. When a descent of the movable inclined member 40 is finished, it will be in a state as illustrated in FIG. 3(C), and a rotation of the rotary member 10 will be stopped.

In this way, by repeating an ascent and a descent of the movable inclined member 40, the rotary member 10 rotates on the inclination 41 of the movable inclined member 40 and the inclination 61 of the fixed inclined member 60 and pushes the cylinders 70 to obtain a power. In a method as illustrated in FIG. 2 and FIG. 3, when viewed from a side, the rotary member 10 rotates at an intersection point X of the inclination 41 of the movable inclined member 40 and the inclination 61 of the fixed inclined member 60. Also, when the cylinders 70 are arranged at both of the movable inclined member 40 and the fixed inclined member 60, the rotary member 10 can push both of the cylinders 70 at the movable inclined member 40 and the fixed inclined member 60, so a power is obtained efficiently.

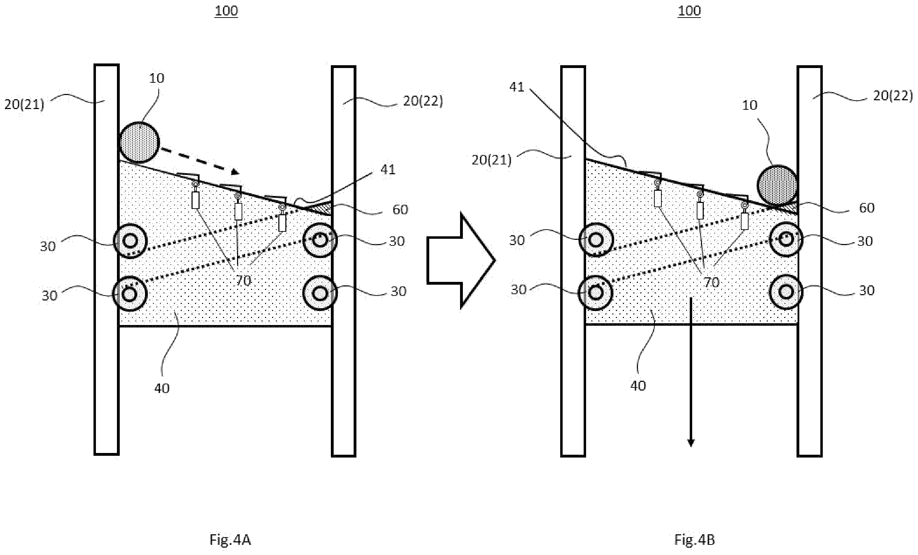

Next, showing another example. FIG. 4 is a side view of a power generator relating to one embodiment of the present invention, FIG. 4(A) is a view of a state when a movable inclined member is ascended and before a rotary member rotates on an inclination of a movable inclined member, and FIG. 4(B) is a view of a state when a rotation of a rotary member is ended.

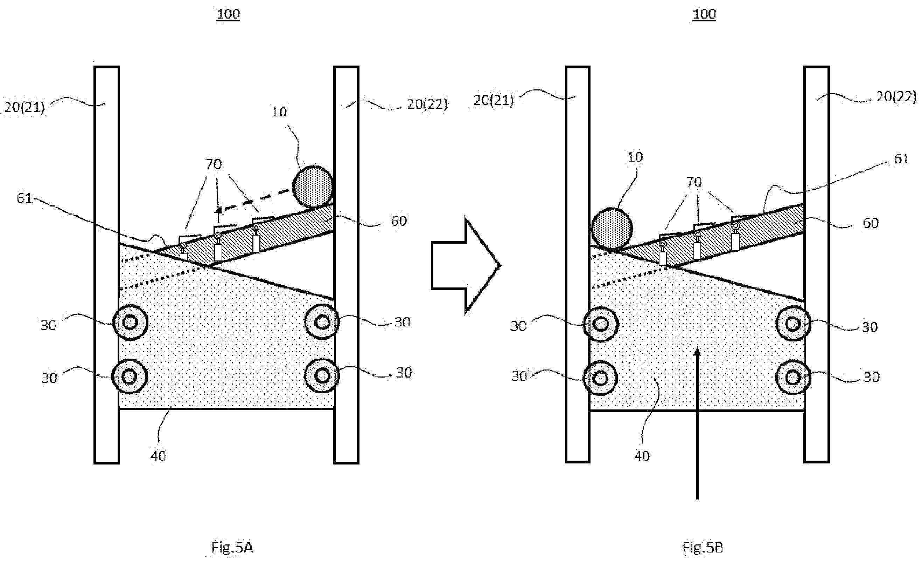

Also, FIG. 5 is a side view of a power generator relating to one embodiment of the present invention, FIG. 5(A) is a view of a state when a movable inclined member is descended and before a rotary member rotates on an inclination of a fixed inclined member, and FIG. 5(B) is a view of a state when a rotation of a rotary member is ended. In addition, in FIG. 4 and FIG. 5, the descriptions of the roller receiving members are omitted. In addition, in FIG. 4 and FIG. 5, the cylinders 70 are arranged at the movable inclined member 40 and the fixed inclined member 60.

The movable inclined member 40 is ascended as illustrated in FIG. 4(A), and then, the rotary member 10 rotates on the inclination 41 of the movable inclined member 40 and pushes the cylinders 70. A stopper should be arranged to prevent a rotation of the rotary member 10 when ascending. And, when a rotation of the rotary member 10 on the inclination 41 of the movable inclined member 40 is ended, it will be in a state as illustrated in FIG. 4(B).

And, the movable inclined member 40 is descended as illustrated in FIG. 5(A), and the rotary member 10 rotates on the inclination 61 of the fixed inclined member 60 and pushes the cylinders 70. When a rotation of the rotary member 10 on the inclination 61 of the fixed inclined member 60 is ended, it will be in a state as illustrated in FIG. 5(B).

As described in the above, a power is generated by rotating the rotary member 10 to push the cylinders 70, by repeating an ascent and a descent of the movable inclined member 40.

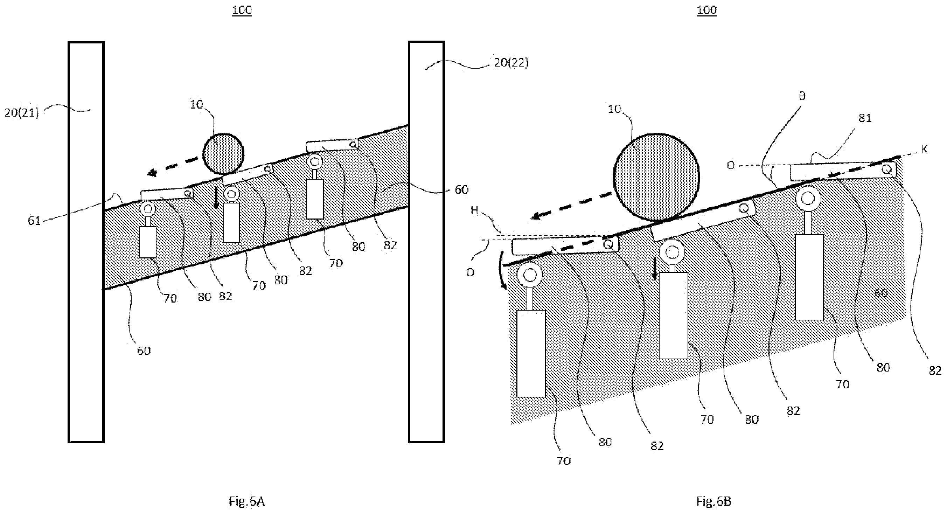

FIG. 6 is a partially enlarged side view of a power generator, FIG. 6(A) is a side view of a power generator comprising pressing parts at a top of cylinders arranged at a fixed inclined member, and FIG. 6(B) is an enlarged view of FIG. 6(A).

As illustrated in FIG. 6(A) and FIG. 6(B), it is preferable to further comprise pressing parts 80 to be pressed by the rotary member 10 at a top of the cylinders 70. As illustrated in FIG. 6(A), the rotary member 10 rotates and presses the pressing parts 80 by its self-weight to push the cylinders 70 and obtain a power. In this way, the rotary member 10 can press the pressing parts 80 smoothly, and a power is transmitted to the cylinders 70 easily, so a power is generated efficiently.

As illustrated in FIG. 6(B), the pressing parts 80 respectively comprise a plane part 81, and it is preferable that there is a difference θ between an angle O of the plane part 81 and an angle K of the inclination of the movable inclined member 40 and the fixed inclined member 60 (in FIG. 6(B), angle K of the inclination 61 of the fixed inclined member 60). In this way, a downward power (gravity) of the rotary member 10 transmitted to the cylinders 70 will be increased, so a power is generated efficiently.

Also, as illustrated in FIG. 6(B), the angle O of the plane part 81 is preferably inclined for one to ten degrees or for one to five degrees downwardly with respect to a horizonal line H (0 degree). In this way, a rotation of the rotary member 10 will be smooth, and the pressing parts will be easy to be pressed. In addition, it is preferable to arrange a shaft 82 for the pressing parts 80 respectively, so that a pressing of the pressing parts 80 will be smooth.

In addition, in FIG. 6(A) and FIG. 6(B), the cylinders 70 and the pressing parts 80 are arranged at the fixed inclined member 60, but the cylinders 70 and the pressing parts 80 may be arranged at the movable inclined member 40 as well.

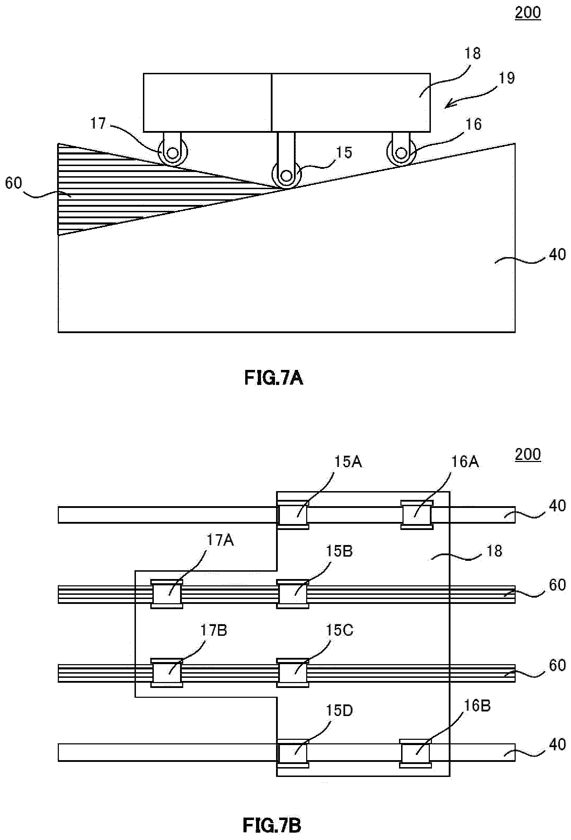

Next, explaining about a power generator 200 relating to other embodiment of the present invention. FIG. 7(A) is a side view of a power generator relating to other embodiment of the present invention, and FIG. 7(B) is a plan view thereof (view transmitting a base). In addition, about parts overlapping with the above embodiment, same reference numbers are given in the drawings and its explanations are omitted.

In other embodiment of the present invention, a rotary member is a plurality of wheels 15, 16, 17 rotating on the movable inclined member 40 or the fixed inclined member 60, and the plurality of wheels 15, 16, 17 may be connected to a base 18 and move integrally as a carriage 19. Concerning the plurality of wheels 15, 16, 17, in addition to wheels 15 (15A to 15D) for rotating at a boundary portion of the movable inclined members 40 and the fixed inclined members 60, auxiliary wheels 16 (16A, 16B) at the movable inclined members 40 side and/or auxiliary wheels 17 (17A, 17B) at the fixed inclined members 60 side may be provided, as illustrated in FIG. 7(A) and FIG. 7(B).

In this way, when the plurality of wheels 15, 16, 17 including the auxiliary wheels are arranged to be connected to the base 18 to move integrally as the carriage 19, an angle between an inclined surface of the movable inclined member 40 and an inclined surface of the fixed inclined member 60 will be always constant, so even when the movable inclined member 40 moves up and down, the carriage moves stably while keeping a horizontal state (same posture).

In addition, an arrangement of the movable inclined member 40, the fixed inclined member 60, and each wheel, or a shape of the base 18 should not be limited only to the embodiment illustrated in FIG. 7(A) and FIG. 7(B). For example, the movable inclined members 40 and the fixed inclined members 60 may be arranged alternatingly, and according to the arrangement of the movable inclined members 40 and the fixed inclined members 60, a position of the auxiliary wheels and a shape of the base may be changed accordingly according to its intended use.

One or more cylinders operating in a vertical direction may be arranged at the carriage 19. Or, the cylinders may be arranged at the movable inclined member 40 and the fixed inclined member 60 as in the above embodiment.

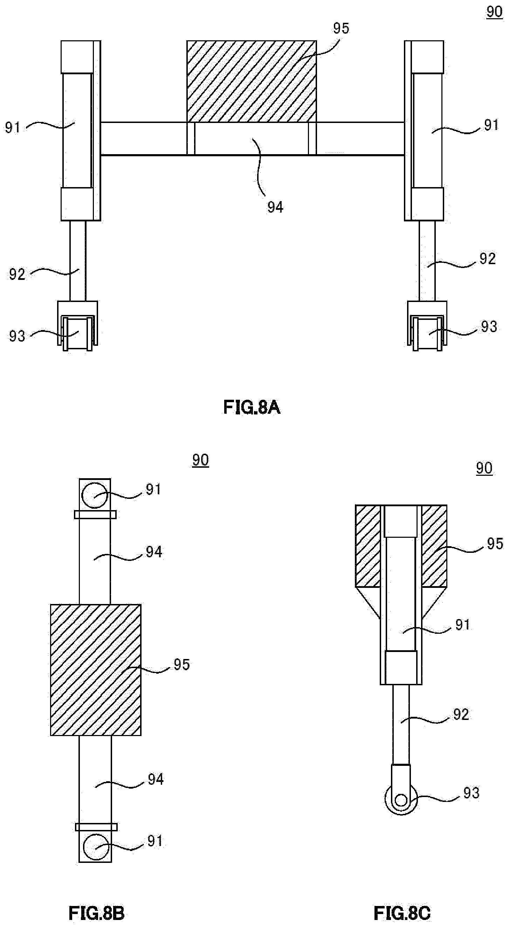

Further, as other new embodiment in the embodiments of the present invention, explaining about a configuration comprising a pressure converter. FIG. 8(A) is a front view of a pressure converter in a power generator relating to the present invention, FIG. 8(B) is a plan view thereof, and FIG. 8(C) is a side view thereof.

As illustrated in FIG. 8(A), FIG. 8(B), and FIG. 8(C), a pressure converter 90 at least comprises: one or more cylinders 91; wheels 93 for cylinders respectively arranged at a tip of respective piston rods 92 of the cylinders 91; a frame 94 for holding the one or more cylinders 91; and a weight 95 arranged at the frame 94. As an example, in the pressure converter 90, the cylinders 91 are mounted at both ends of the frame 94, and the weight 95 is mounted at near a center of the frame 94. In addition, a weight of the weight 95 may be decided accordingly according to its intended use.

By configuring as such structure, an operation of the wheels 93 for cylinders to move up and down may be converted to a power of the cylinders 91 via the piston rods 92. In addition, a structure of the pressure converter 90 is not limited to the embodiment illustrated in FIG. 8(A), FIG. 8(B), and FIG. 8(C) as long as it is a structure capable of transmitting the up and down movements of the wheels 93 for cylinders to the cylinders 91, and a number and a position of the cylinders 91, a shape of the frame 94, and else may be changed accordingly according to its intended use.

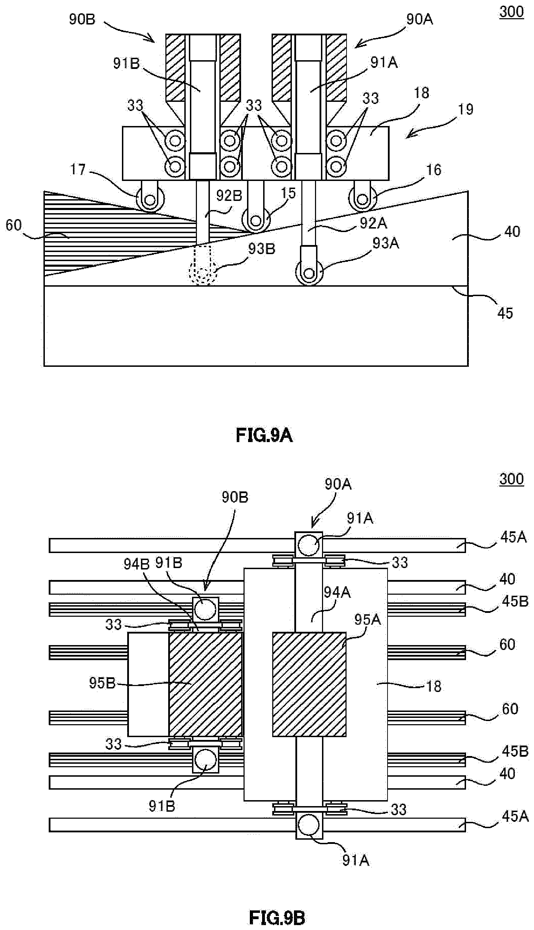

At last, explaining about one embodiment of a power generator comprising such pressure converter. FIG. 9(A) is side view of a power generator comprising a pressure converter relating to other embodiment of the present invention, and FIG. 9(B) is a plan view thereof.

In a power generator 300 relating to one embodiment of the present invention, the frame 94 of the pressure converter 90 may be mounted on the base 18 of the carriage 19, and as illustrated in FIG. 9(B), the pressure converter 90 may be arranged across the carriage 19. At this time, as illustrated in FIG. 9(A), pulleys 33 may be arranged at sides of the base 18, and respective cylinders 91 of the pressure converter 90 may be interposed between the pulleys 33 so that the cylinders 91 can move freely only in up and down directions. In addition, in FIG. 9(A) and FIG. 9(B), two pressure converters 90A, 90B are mounted, but of course, it should not be limited to this embodiment, and a number, a position of arrangement, a form, and else of the pressure converter 90 may be changed accordingly according to its intended use.

Also, rails 45 for cylinders are arranged at a side of the movable inclined members 40. The wheels 93 for cylinders of the pressure converter 90 are mounted on the rails 45 for cylinders, and move on the rails 45 for cylinders. For example, the rails 45 for cylinders are connected to the movable inclined members 40 via (unillustrated) connection members, or formed integrally with the movable inclined members 40, to move in conjunction with the up and down movements of the movable inclined members 40.

In this way, the wheels 93 for cylinders on the rails 45 for cylinders move up and down in conjunction with the up and down movements of the movable inclined members 40, and this operation can be transmitted to the cylinders 91 via the piston rods 92. In addition, the rails 45 for cylinders may be arranged horizontally as illustrated in FIG. 9(A), or the rails 45 for cylinders may be inclined. Also, in FIG. 9(B), the rails 45A, 45B for cylinders are arranged at both sides of respective movable inclined members 40, but a direction of attachment (inside and outside) of the rails 45A, 45B for cylinders may be decided accordingly according to its intended use. Members and an attachment method of the rails 45 for cylinders are not limited particularly.

From the above, according to a power generator 100, 200, 300 relating to one embodiment of the present invention, a power is generated by rotating a rotary member. Especially, even in an area or a place where an electric power is not supplied, materials such as a gas or a liquid can be transferred by a power generated without using a power supply.

In addition, it is explained in detail about each embodiment and each example of the present invention as the above, but it can be understood easily for those who skilled in the art that various modifications can be made without practically departing from new matters and effect of the present invention. Therefore, all such variants should be included in the scope of the present invention.

For example, terms described with different terms having broader or equivalent meaning at least once in description and drawings can be replaced with these different terms in any part of description and drawings. In addition, operation and configuration of the power generator are not limited to those explained in each embodiment and each example of the present invention, and various modifications can be made.

A power generator relating to one embodiment of the present invention and a method for generating a power, and a power generator relating to other embodiment of the present invention require no electric power, and able to output a power in various scenes, but output power can be applied, for example to a pump, a compressor, or the like.

### Glossary of Drawing References

10 Rotary member
15 (15A, 15B, 15C, 15D) Wheels
16, 17 (16A, 16B, 17A, 17B) Auxiliary wheels
18 Base
19 Carriage
20 Columns
21 One column
22 Other column
30 Roller members
33 Pulleys
35 Roller receiving members
40 Movable inclined member
41 Inclination of movable inclined member
45 (45A, 45B) Rails for cylinders
50 Supporting members
60 Fixed inclined member
61 Inclination of fixed inclined member
70 Cylinders
80 Pressing parts
81 Plane part (of pressing parts)
82 Shaft (of pressing parts)
90 (90A, 90B) Pressure converter
91 (91A, 91B) Cylinders
92 (92A, 92B) Piston rods
93 (93A, 93B) Wheels for cylinders
94 (94A, 94B) Frame
95 (95A, 95B) Weight
100, 200, 300 Power generator
X Intersection point of inclination of movable inclined member and inclination of fixed inclined member
O Angle of plane part of pressing parts
K Angle of fixed inclined member
θ Difference (between angle of plane part of pressing parts and angle of inclination of movable inclined member and fixed inclined member)
H Horizontal line (0 degree)

## Claims

1. A power generator for generating a power by rotating a rotary member, comprising:
opposing columns for supporting the power generator;
one or more movable inclined members inclined from one column to other column for rotating the rotary member and capable of ascending and descending along the columns by one or more roller members arranged at opposite ends of the movable inclined members and by roller receiving members provided at the columns; and
one or more fixed inclined members inclined from the other column to the one column for rotating the rotary member and provided at the columns or at supporting members for supporting the columns.

2. The power generator according to claim 1, wherein further comprising one or more cylinders arranged at the movable inclined members and/or the fixed inclined members and/or the rotary member.

3. The power generator according to claim 1, wherein two or more of the movable inclined members and two or more of the fixed inclined members are provided.

4. The power generator according to claim 3, wherein the fixed inclined members are arranged at inner side of the movable inclined members.

5. The power generator according to claim 2, wherein further comprising pressing parts respectively arranged at a top of the cylinders to be pressed by the rotary member.

6. The power generator according to claim 5, wherein the pressing parts respectively comprise a plane part, and
there is a difference between an angle of the plane part and an angle of inclinations of the movable inclined members and the fixed inclined members.

7. The power generator according to claim 1, wherein the rotary member is a plurality of wheels rotating on the movable inclined members or the fixed inclined members, and the plurality of wheels are connected to a base and move integrally as a carriage.

8. The power generator according to claim 7, wherein one or more cylinders operating in a vertical direction are arranged at the carriage.

9. The power generator according to claim 8, wherein a pressure converter comprising: one or more cylinders; wheels for cylinders respectively arranged at a tip of respective piston rods of the cylinders; a frame for holding the one or more cylinders; and a weight arranged at the frame, is arranged at the carriage.

10. The power generator according to claim 9, wherein rails for cylinders are arranged to interlock with a movement of movable inclined members, and the wheels for cylinders of the pressure converter move up and down in accordance with an ascent and a descent of the movable inclined members, while moving on the rails for cylinders, to transmit a power to the cylinders via the piston rods.
